# EUROPÄISCHE PATENTANMELDUNG

(11) **EP 3 324 057 A1**
(43) Veröffentlichungstag der Anmeldung: **23.05.2018**
(21) Anmeldenummer: 17199816.4
(22) Anmeldetag: 03.11.2017
(51) Int. Cl.: F16B 13/06, F16B 13/08

(54) **SPREIZANKER**

(30) Priorität: 17.11.2016 DE 102016122114; 25.07.2017 DE 102017116735
(71) Anmelder: fischerwerke GmbH & Co. KG, 72178 Waldachtal (DE)
(72) Erfinder: Linka, Martin, 72160 Horb a.N. (DE); Dixa, Raphael, 72178 Waldachtal (DE)
(74) Vertreter: Suchy, Ulrich Johannes

(57) **Zusammenfassung**

Die Erfindung betrifft einen Spreizanker (1) mit einem einstückigen Schaft (2) aus Metall, der ein Außengewinde (4), einen Abstandsabschnitt (9) und einen Spreizabschnitt (10) mit einem Spreizteil (12) aufweist. Um den Spreizanker (1) möglichst ohne Werkzeug und von Hand in ein Bohrloch einbringen zu können, wird vorgeschlagen, dass der Außendurchmesser (D_{A}) des Abstandsabschnitts (9) kleiner als der Nenndurchmesser des Spreizankers (1) ist und die Spreizhülse (3) im nicht-gespreizten Zustand einen Außendurchmesser (D_{SH}) aufweist, der kleiner als der Nenndurchmesser des Spreizankers (1) ist, derart, dass der Mittelwert der maximalen Außendurchmesser (D_{A}, D_{SH}, D_{S}) des Abstandsabschnitts (9), der nicht-gespreizten Spreizhülse (3) und des Spreizabschnitts (10) kleiner als 96%, und insbesondere kleiner als 94% des Nenndurchmessers des Spreizankers (1) ist.

## Beschreibung

Die Erfindung betrifft einen Spreizanker mit den Merkmalen des Oberbegriffs des Anspruchs 1 sowie eine Befestigungsanordnung gemäß dem Oberbegriff des Anspruchs 11.

Ein gattungsgemäßer Spreizanker ist aus der europäischen Patentschrift EP 1 807 629 B1 bekannt. Dieser Spreizanker, ein so genannter Bolzenanker, besteht aus einem einstückigen Schaft aus Stahl, der an einem Ende ein Außengewinde und an seinem anderen Ende einen Spreizabschnitt aufweist, an dem eine Spreizhülse angeordnet ist. Der Bolzenanker wird beispielsweise zum Befestigen einer Stahlkonsole an einer Wand aus Stahlbeton verwendet. Hierzu wird der Spreizanker mit dem Spreizabschnitt voraus in ein Bohrloch, das zuvor in die Wand eingebracht wurde, eingesteckt und mit einem Hammer so weit eingeschlagen, bis eine gewünschte Verankerungstiefe erreicht ist.

Aufgabe der Erfindung ist, einen Spreizanker vorzuschlagen, der ohne großen Kraftaufwand, möglichst von Hand und ohne den Einsatz eines Hammers oder eines sonstigen Hilfsmittels, bis zu einer gewünschten Verankerungstiefe in das Bohrloch eingesteckt werden kann.

Diese Aufgabe wird erfindungsgemäß durch einen Spreizanker mit den Merkmalen des Anspruchs 1 gelöst. Der erfindungsgemäße Spreizanker weist einen Schaft und eine Spreizhülse auf. Sowohl der Schaft, als auch die Spreizhülse sind aus Metall hergestellt, zumindest im Wesentlichen. Der Schaft ist insbesondere einstückig, also als ein Stück und nicht mehrteilig hergestellt, insbesondere durch Drehen oder Umformen. Der Schaft erstreckt sich stabförmig entlang einer Längsachse des Spreizankers und weist an seinem hinteren Ende ein Lastangriffsmittel auf. Das Lastangriffsmittel ist insbesondere ein Außengewinde, mit dem ein Anbauteil mittels einer Mutter am Spreizanker und somit an einem Verankerungsgrund, beispielsweise einer Wand aus Stahlbeton, in der der Spreizanker verankert wird, befestigt werden kann. "Hinten" bedeutet hier "in Einbringrichtung gesehen hinten", wobei die "Einbringrichtung" die Richtung ist, in die der Spreizanker planmäßig in ein Bohrloch im Verankerungsgrund eingesteckt wird, in dem der Spreizanker verankert werden soll. Im Regelfall ist die Einbringrichtung parallel oder identisch zur Längsachse des Spreizankers. In Einbringrichtung vor dem Lastangriffsmittel weist der Schaft einen Spreizabschnitt auf und zwischen dem Lastangriffsmittel und dem Spreizabschnitt einen Abstandsabschnitt, der sich nach dem Einbringen des Spreizankers in ein Bohrloch im Bohrloch befindet. Insbesondere ist der Abstandsabschnitt gewindelos und insbesondere zylindrisch, insbesondere kreiszylindrisch ausgeführt. Insbesondere weist der Abstandsabschnitt einen Außendurchmesser auf, der kleiner als der Außendurchmesser des Lastangriffsmittels ist. Im Spreizabschnitt ist ein Spreizteil angeordnet. Das Spreizteil ist insbesondere konisch, das heißt, es erweitert sich in Einbringrichtung im Durchmesser. Das Spreizteil kann sich in Einbringrichtung beispielsweise kontinuierlich als Kegelstumpf über seine gesamte Länge erweitern, die Erweiterung kann aber auch abschnittsweise oder gekrümmt erfolgen. Alternativ kann auch eine Keilfläche vorgesehen sein. An das Spreizteil kann sich ein Abschnitt mit gleich bleibendem oder sich veränderndem Durchmesser, insbesondere mit sich wieder verringerndem Durchmesser anschließen, der insbesondere das vordere Ende des Spreizabschnitts bildet. Die Spreizhülse ist am Schaft, insbesondere am Spreizabschnitt angeordnet, im nicht-gespreizten Zustand insbesondere hinter dem Spreizteil. Insbesondere umgreift die Spreizhülse einen Halsabschnitt des Spreizabschnitts, der einen gegenüber dem Abstandsabschnitt reduzierten Durchmesser aufweist. Die Spreizhülse umgreift den Spreizabschnitt in Umfangsrichtung, so dass die Spreizhülse mit dem Schaft verliersicher verbunden, aber gegenüber dem Spreizabschnitt verschiebbar ist. Die Verschiebung erfolgt insbesondere in Längsrichtung. Alternativ kann die Verschiebung auch in Umfangsrichtung erfolgen, beispielsweise durch Drehen des Schafts. Zum Verankern wird die Spreizhülse durch ein Einziehen des Spreizteils in die Spreizhülse gespreizt, d.h. im Durchmesser erweitert und hierdurch gegen die Wand des Bohrlochs verspannt. Insbesondere weist die Spreizhülse hierzu Schlitze auf, die die Spreizhülse in einzelne Spreizelemente unterteilt.

Erfindungsgemäß ist der Außendurchmesser des Abstandsabschnitts kleiner als der Nenndurchmesser des Spreizankers und die Spreizhülse weist im nicht-gespreizten Zustand einen Außendurchmesser auf, der kleiner als der Nenndurchmesser des Spreizankers ist, derart, dass der Mittelwert der maximalen Außendurchmesser des Abstandsabschnitts, der nicht-gespreizten Spreizhülse und des Spreizabschnitts kleiner als 96 % und insbesondere kleiner als 94 % des Nenndurchmessers des Spreizankers ist. Ein derart ausgebildeter Spreizanker lässt sich in den meisten Fällen ohne großen Kraftaufwand von Hand und ohne die Zuhilfenahme eines Hammers oder eines anderen Werkzeugs in ein Bohrloch einstecken, was die Montage des erfindungsgemäßen Spreizankers gegenüber den aus dem Stand der Technik bekannten Spreizankern wesentlich vereinfacht.

Der Nenndurchmesser des Spreizankers entspricht dem Bohrernenndurchmesser des Bohrers, mit dem das Bohrloch erstellt wird, in den der Spreizanker planmäßig zum Verankern eingebracht wird. Insbesondere ist der Nenndurchmesser mittels einer Nenndurchmesserangabe auf dem Spreizanker, beziehungsweise auf dem Bohrer angegeben, insbesondere durch eine Prägung, durch Drucken oder Laserbeschriften. Die Angabe des Nenndurchmessers erfolgt insbesondere zahlenmäßig, kann jedoch auch durch eine Farbcodierung oder eine andere Symbolik erfolgen. Beispielsweise wird für einen Spreizanker mit Nenndurchmesser 10 mm ein Bohrer mit Bohrernenndurchmesser 10 mm verwendet. Der Außendurchmesser des Abstandsabschnitts und der Außendurchmesser der Spreizhülse im ungespreizten Zustand ist bei dem erfindungsgemäßen Spreizanker gemäß diesem Beispiel somit kleiner als 10 mm. Der Mittelwert von maximalem Außendurchmesser des Abstandsabschnitts, der ungespreizten Spreizhülse und des Spreizteils ist kleiner als 9,7 mm. Der Bohrernenndurchmesser ist der auf ganze Millimeter abgerundete Durchmesser des für den Durchmesser des herzustellenden Bohrlochs maßgebenden Bereichs des Bohrers, der auch Bohrereckmaß genannt wird. Dieser Durchmesser wird insbesondere durch die Größe von Hartmetallplatten bestimmt, die typischerweise in den Kopf von handelsüblichen Beton- und/oder Gesteinsbohren eingearbeitet sind. Das Bohrereckmaß ist üblicherweise in Abhängigkeit vom Nennmaß 0,05 mm bis 0,8 mm größer als der Bohrernenndurchmesser. Beispielsweise liegt das Bohrereckmaß eines Bohrers mit Bohrernenndurchmesser 10 mm üblicherweise zwischen 10,05 mm und 10,45 mm. Genauere Angaben hierzu sind der Figur 3.1 der "ETAG 0001, Guideline for European technical approval of metal anchors for use in concrete, Edition 1997, 3rd Amended April 2013" zu entnehmen.

Der Außendurchmesser der Spreizhülse kann von der Art der Anbringung der Hülse am Schaft abhängig sein, beispielsweise davon, wie stark die Spreizhülse um einen Halsabschnitt des Schafts, an dem sie in einem ungespreizten Zustand angeordnet sein kann, gebogen ist. Da die Spreizhülse unabhängig von der Montageart beim Einführen in ein Bohrloch auf einen minimalen Durchmesser so zusammengedrückt werden kann, dass sie am Hals flächig anliegt, so dass sie dem Einführen den geringsten Widerstand entgegensetzt, ist hier als Außendurchmesser der nicht-gespreizten Spreizhülse die Summe aus dem Durchmessers des Halsabschnitts und der doppelten Wandstärke des Spreizhülse anzusetzen. Bei nicht-kreisförmigen Querschnitten entspricht der Außendurchmesser dem Durchmesser eines Umkreises um den Querschnitt. Lokale Erhöhungen an der Spreizhülse, wie Nasen oder Federzungen, sogenannte Halteelemente, die die Aufgabe haben, die Spreizhülse im unverspreizten Zustand an der Bohrlochwand vor dem Verspreizen zu halten, werden bei der Ermittlung des Außendurchmessers der nicht-gespreizten Spreizhülse nicht berücksichtigt. Mit "lokal" ist insbesondere gemeint, dass die Erhöhungen einen Flächenanteil von weniger als 10 % an der äußeren Umfangsfläche der Spreizhülse aufweisen.

Eine besonders einfache Montage des erfindungsgemäßen Spreizankers ist dann möglich, wenn der der Mittelwert der maximalen Außendurchmesser des Abstandsabschnitts, der nicht-gespreizten Spreizhülse und des Spreizabschnitts um mindestens die Summe aus 0,1 mm und 1/20 des Nenndurchmessers des Spreizankers in Millimeter kleiner als der Nenndurchmesser des Spreizankers ist. Bei einem Spreizanker mit Nenndurchmesser 10 mm beträgt der Mittelwert somit maximal 10 mm - 0,5 mm - 0,1 mm = 9,4 mm

Vorzugsweise weist der Abstandsabschnitt einen Außendurchmesser auf, der kleiner als 97 %, insbesondere kleiner als 95 %, und insbesondere kleiner als 93 % des Nenndurchmessers des Spreizankers ist, und/oder die nicht-gespreizte Spreizhülse einen Außendurchmesser aufweist, der kleiner als 97 %, insbesondere kleiner als 95 %, und insbesondere kleiner als 93 % des Nenndurchmessers des Spreizankers ist, und/oder der Spreizabschnitt einen Außendurchmesser aufweist, der kleiner als 97 % und insbesondere kleiner als 95 % des Nenndurchmessers des Spreizankers ist und/oder der Außendurchmesser des Abstandsabschnitts kleiner als 97 %, und insbesondere kleiner als 95 % des Außendurchmessers der nicht-gespreizten Spreizhülse ist.

Bei einer bevorzugten Ausgestaltungsform des erfindungsgemäßen Spreizankers ist die axiale Länge des Abstandsabschnitts größer als die Länge des Spreizabschnitts. Insbesondere ist in diesem Fall der Außendurchmesser des Abstandsabschnitts kleiner als der Außendurchmesser des Spreizabschnitts und der nicht-gespreizten Spreizhülse, so dass auch bei einem langen Spreizanker die Montage durch das leichte Einführen des Spreizankers in ein Bohrloch vereinfacht ist.

Um die Spreizhülse nach dem Einführen in ein Bohrloch ortsfest zu halten, so dass der Schaft zum Verspreizen relativ zur Spreizhülse im Bohrloch bewegt werden kann, ist bei einer bevorzugten Ausgestaltungsform des erfindungsgemäßen Spreizankers am Spreizabschnitt und/oder an der Spreizhülse mindestens ein Halteelement zum Halten der Spreizhülse im Bohrloch angeordnet. Bei dem Halteelement kann es sich beispielsweise um eine in die Spreizhülse geprägte Nase oder um eine Federzunge handeln, die einstückig mit der Spreizhülse ist. Vorzugsweise ist das Halteelement aber nicht einstückig mit der Spreizhülse. Insbesondere ist das Halteelement elastisch verformbar, insbesondere in einer Richtung radial zur Längsachse des Spreizankers, so dass das Halteelement das leichte Einbringen des Spreizankers in ein Bohrloch nicht oder allenfalls geringfügig erschwert. Um ein leichtes Einführen zu ermöglichen, ist das Halteelement insbesondere aus Kunststoff oder Gummi hergestellt und insbesondere am hinteren Ende der Spreizhülse beziehungsweise zwischen der Spreizhülse und dem Abstandsabschnitt, insbesondere an einem Halsabschnitt des Spreizabschnitts angeordnet. Das Halteelement kann insbesondere die Form einer Hülse oder eines Rings aufweisen. Vorzugsweise weist das Halteelement vor dem Einführen in ein Bohrloch einen Außendurchmesser auf, der mindestens 0,8 Millimeter, insbesondere mindestens 1,0 Millimeter größer als der Nenndurchmesser des Spreizankers ist, so dass die Spreizhülse auch in einem Bohrloch, das mit einem Bohrer mit relativ großem Bohrereckmaß gebohrt ist, durch das Halteelement ausreichend gehalten ist.

Ist der erfindungsgemäße Spreizanker in ein Bohrloch eingebracht, so bildet der Spreizanker mit dem Verankerungsgrund und dem Bohrloch eine Befestigungsanordnung. Das Bohrloch ist typischerweise ein Sackloch, das im Wesentlichen zylindrisch und ohne eine speziell ausgeformte Hinterschneidung gebohrt ist. Erfindungsgemäß ist der Spreizanker nur so weit in das Bohrloch eingebracht, dass das Lastangriffsmittel nicht im Bohrloch angeordnet ist. Das bedeutet, dass beispielsweise ein Außengewinde, das das Lastangriffsmittel bildet, nach dem Einbringen des Spreizankers in das Bohrloch sich nicht im Bohrloch befindet. Somit kann das Lastangriffsmittel einen Außendurchmesser aufweisen, der größer als der Außendurchmesser des Abstandsabschnitts und insbesondere größer als der Nenndurchmesser des Spreizankers ist. Da das Lastangriffsmittel erfindungsgemäß nicht in das Bohrloch eingebracht wird, behindert der größere Außendurchmesser des Lastangriffsmittels das Einführen des Spreizankers in das Bohrloch nicht. Das Lastangriffsmittel kann daher insbesondere als ein metrisches Normgewinde ausgeformt und eine handelsübliche Mutter auf das Außengewinde aufgeschraubt werden.

Die Erfindung wird nachfolgend anhand eines Ausführungsbeispiels eines erfindungsgemäßen Spreizankers näher erläutert.

Es zeigen:
- Figur 1: einen erfindungsgemäßen Spreizanker in einer Seitenansicht; und
- Figur 2: einen Schnitt durch den Spreizanker der Figur 1 in der Ebene II-II.

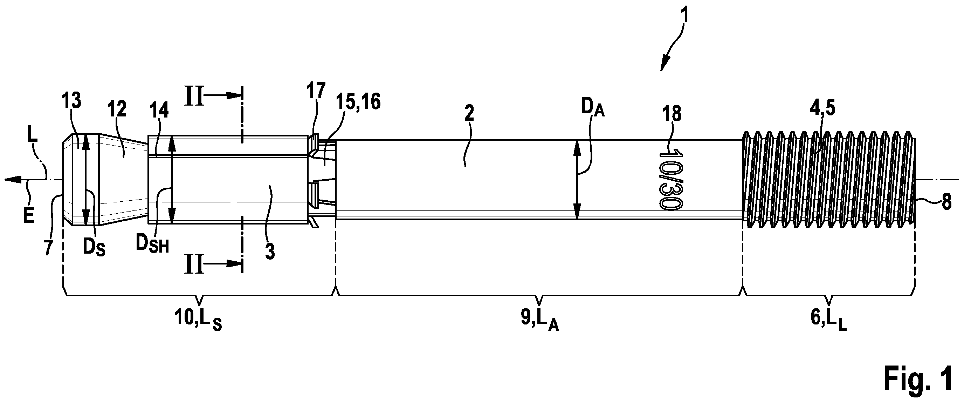

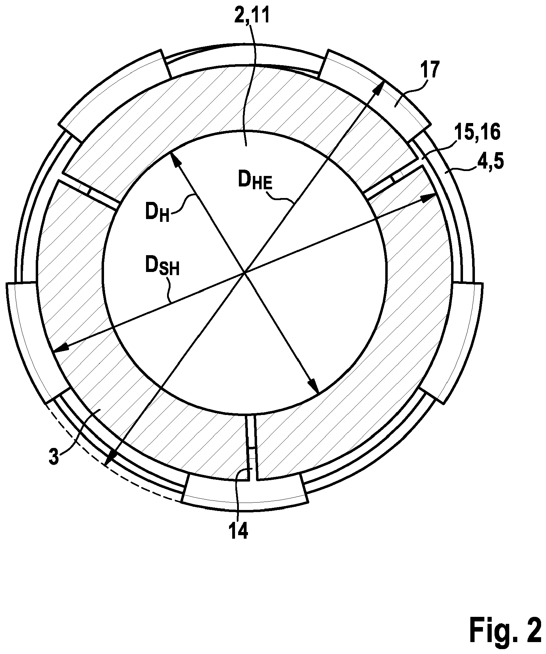

Der in den Figuren 1 und 2 dargestellte Spreizanker 1 dient zum Befestigen eines Gegenstands (nicht dargestellt) an einem Verankerungsgrund (ebenfalls nicht dargestellt). Hierzu wird der Spreizanker 1 in ein Bohrloch (nicht dargestellt), ein im Wesentlichen zylindrisches Sackloch, mit seinem einbringseitig vorderen Ende 7 voraus in Einbringrichtung E in das Bohrloch eingebracht. Der Spreizanker 1 umfasst einen Schaft 2 aus Metall, der durch Kaltmassivumformung aus einem Stahldraht einstückig hergestellt ist, sowie eine Spreizhülse 3, ein Stanzbiegeteil aus Metall. Der Schaft 2 erstreckt sich entlang einer Längsachse L des Spreizankers 1 und weist ein metrisches Außengewinde 4 als Lastangriffsmittel 5 auf, das sich von dem in Einbringrichtung E hinteren Ende 8 des Schafts 2 in Einbringrichtung E über einen hinteren Teil 6 des Schafts 2 mit der Länge L_{L} erstreckt. Die Länge L_{L} ist so gewählt, dass das Lastangriffsmittel 5 nach dem planmäßigen Einbringen des Spreizankers 1 in das Bohrloch nicht im Bohrloch angeordnet ist. Somit behindert das Außengewinde 4 das Einbringen des Spreizankers 1 in ein Bohrloch nicht.

An das Lastangriffsmittel 5 schließt sich in Einbringrichtung E ein zylindrischer, gewindeloser Abstandsabschnitt 9 mit der Länge L_{A} und einem Außendurchmesser D_{A} an, der einen Spreizabschnitt 10 vom Außengewinde 4 trennt. Bei dem dargestellten Spreizanker 1 ist die Länge L_{A} des Abstandsabschnitts 9 ungefähr 50 % größer als die Länge L_{S} des Spreizabschnitts 10. Der Spreizabschnitt 10 grenzt an den Abstandsabschnitt 9 mit einem im Durchmesser reduzierten Halsabschnitt 11 mit Außendurchmesser D_{H} an, der in dem in Einbringrichtung E vorderen Teil des Spreizabschnitts 10 in ein Spreizteil 12 übergeht. Das Spreizteil 12 ist als Kegelstumpf ausgeführt, der sich ausgehend vom Halsabschnitt 11 in Einbringrichtung E im Durchmesser bis zum Außendurchmesser D_{S} erweitert, dem maximalen Außendurchmesser des Spreizabschnitts 10. An das Spreizteil 12 schließt sich in Einbringrichtung E ein zylindrischer Abschnitt 13 an, der ebenfalls den Durchmesser D_{S} aufweist und am vorderen Ende 7, zum leichteren Einführen des Spreizankers 1 in ein Bohrloch, abgeschrägt ist. In dem in den Figuren dargestellten nicht-gespreizten Zustand umgreift die Spreizhülse 3 den Halsabschnitt 11 derart, dass die Spreizhülse 3 einen Hohlzylinder mit einem Außendurchmesser D_{SH} bildet. Die Spreizhülse 3 weist auf ihrer einbringseitig vorderen Seite vier Schlitze 14 auf, die sich öffnen, wenn das Spreizteil 12 bei der Montage des Spreizankers 1 in einem Bohrloch in die Spreizhülse 3 eingezogen wird und dabei die Spreizhülse 3 spreizt, also radial im Durchmesser aufweitet.

Um die Spreizhülse 3 bei der Montage im Bohrloch zu halten, damit der Schaft 2 zum Aufspreizen der Spreizhülse 3 relativ zur Spreizhülse 3 entgegen der Einbringrichtung E verschoben werden kann, ist am Spreizabschnitt 10, zwischen der Spreizhülse 3 und dem Abstandsabschnitt 9 ein gesondertes, von der Spreizhülse 3 getrenntes Halteelement 15 angeordnet. Das Halteelement 15 ist aus Kunststoff als Spritzgussteil hergestellt. Es weist einen Grundkörper 16 in Form einer hohlzylindrischen Hülse auf, die den Halsabschnitt 11 umgreift und auf diesem in Richtung der Längsachse L beweglich ist. An der Außenseite des Grundkörpers 16 sind radial nach außen und entgegen der Einbringrichtung E abstehende, elastisch federnde Kragarme 17 angeordnet, deren radial äußeren Enden den Außendurchmesser D_{HE} des Halteelements 15 definieren. Wird der Spreizanker 1 in ein Bohrloch eingebracht, so klappen die Kragarme 17 radial nach innen, verhaken sich aber beim Zurückziehen in der Bohrlochwand und halten das Halteelement 15 und somit die Spreizhülse 3 gegen eine Bewegung entgegen der Einbringrichtung E aus dem Bohrloch heraus.

Damit der Spreizanker 1 ohne großen Kraftaufwand, insbesondere von Hand und ohne Zuhilfenahme eines Hammers, in ein Bohrloch eingesteckt werden kann, ist der Außendurchmesser D_{A} des Abstandsabschnitts 9 kleiner als der Nenndurchmesser des Spreizankers 1. Der Nenndurchmesser ist auf dem Spreizanker 1 im Abstandsabschnitt 9 in Form einer Prägung 18 als Nenndurchmesserangabe mit "10" für 10 mm angegeben. Die Prägung gibt außerdem die maximal zulässige Dicke des zu befestigenden Gegenstands mit "30" für 30 mm an. Im Ausführungsbeispiel beträgt der Nenndurchmesser somit 10 mm, wohingegen der Außendurchmesser D_{A} des Abstandsabschnitts 9 nur 8,1 mm beträgt. Zudem ist der Außendurchmesser D_{SH} der Spreizhülse 3 im nicht-gespreizten Zustand mit 9,0 mm ebenfalls kleiner als der Nenndurchmesser 10 mm. Auch der Außendurchmesser D_{S} des Spreizabschnitts 10 ist mit 9,0 mm ebenfalls kleiner als der Nenndurchmesser des erfindungsgemäßen Spreizankers 1. Durch diese spezielle Wahl der Durchmesser beträgt der Mittelwert der maximalen Außendurchmesser D_{A} des Abstandsabschnitts 9, D_{SH} der nicht-gespreizten Spreizhülse 3 und D_{S} des Spreizabschnitts 10 8,7 mm und ist somit um mehr als 1,0 mm beziehungsweise 10 %kleiner als der Nenndurchmesser des Spreizankers 1, der 10,0 mm beträgt. Der Spreizanker 1 lässt sich somit ohne großen Kraftaufwand in ein Bohrloch einbringen, das mit einem Bohrer mit Bohrernenndurchmesser 10 mm gebohrt worden ist. Allerdings ist der Außendurchmesser D_{HE} des Halteelements 15 außerhalb eines Bohrlochs mit 11,0 mm um 1,0 mm größer als der Nenndurchmesser des Spreizankers 1. Somit ist gewährleistet, dass das Halteelement 15 auch in einem Bohrloch, das mit einem Bohrer mit Bohrernenndurchmesser 10,0 mm gebohrt wurde und dessen Eckmaß im oberen Toleranzbereich liegt und beispielsweise 10,4 mm beträgt, einen guten Halt an der Bohrlochwand findet und planmäßig gespreizt werden kann.

### Bezugszeichenliste

- 1: Spreizanker
- 2: Schaft
- 3: Spreizhülse
- 4: Außengewinde
- 5: Lastangriffsmittel
- 6: hinterer Teil des Schafts 2
- 7: vorderes Ende des Spreizankers 1
- 8: hinteres Ende des Schafts 2
- 9: Abstandsabschnitt
- 10: Spreizabschnitt
- 11: Halsabschnitt
- 12: Spreizteil
- 13: zylindrischer Abschnitt
- 14: Schlitz
- 15: Halteelement
- 16: Grundkörper
- 17: Kragarm
- 18: Prägung
- E: Einbringrichtung
- D_{A}: Außendurchmesser des Abstandsabschnitts 9
- D_{H}: Außendurchmesser des Halsabschnitts 11
- D_{HE}: Außendurchmesser des Halteelements 15
- D_{S}: Außendurchmesser des Spreizabschnitts 10
- D_{SH}: Außendurchmesser der Spreizhülse 3
- L: Längsachse
- L_{A}: Länge des Abstandsabschnitts 9
- L_{L}: Länge des Lastangriffsmittels 5
- L_{S}: Länge des Spreizabschnitts 10

## Patentansprüche

1. Spreizanker (1) mit einem Schaft (2) aus Metall, der ein Lastangriffsmittel (5), einen Abstandsabschnitt (9) und einen Spreizabschnitt (10) mit einem Spreizteil (12) aufweist,
wobei der Spreizanker (1) eine Spreizhülse (3) aus Metall aufweist, die am Schaft (2) angeordnet und die durch Einziehen des Spreizteils (12) spreizbar ist,
**dadurch gekennzeichnet,**
**dass** der Außendurchmesser (D_{A}) des Abstandsabschnitts (9) kleiner als der Nenndurchmesser des Spreizankers (1) ist und die Spreizhülse (3) im nicht-gespreizten Zustand einen Außendurchmesser (D_{SH}) aufweist, der kleiner als der Nenndurchmesser des Spreizankers (1) ist,
derart, dass der Mittelwert der maximalen Außendurchmesser (D_{A}, D_{SH}, D_{S}) des Abstandsabschnitts (9), der nicht-gespreizten Spreizhülse (3) und des Spreizabschnitts (10) kleiner als 96 %, und insbesondere kleiner als 94 % des Nenndurchmessers des Spreizankers (1) ist.

2. Spreizanker nach Anspruch 1, **dadurch gekennzeichnet, dass** der Mittelwert der maximalen Außendurchmesser (D_{A}, D_{SH}, D_{S}) des Abstandsabschnitts (9), der nicht-gespreizten Spreizhülse (3) und des Spreizabschnitts (10) um mindestens die Summe aus 0,1 mm und 1/20 des Nenndurchmessers des Spreizankers (1) in Millimeter kleiner als der Nenndurchmesser des Spreizankers (1) ist.

3. Spreizanker nach Anspruch 1 oder 2, **dadurch gekennzeichnet, dass** der Abstandsabschnitt (9) einen Außendurchmesser (D_{A}) aufweist, der kleiner als 97 %, und insbesondere kleiner als 95 % des Nenndurchmessers des Spreizankers (1) ist.

4. Spreizanker nach einem der Ansprüche 1 bis 3, **dadurch gekennzeichnet, dass** die nicht-gespreizte Spreizhülse (3) einen Außendurchmesser (D_{SH}) aufweist, der kleiner als 97 %, und insbesondere kleiner als 95 % des Nenndurchmessers des Spreizankers (1) ist.

5. Spreizanker nach einem der Ansprüche 1 bis 4, **dadurch gekennzeichnet, dass** der Spreizabschnitt (10) einen Außendurchmesser (D_{S}) aufweist, der kleiner als 97 %, und insbesondere kleiner als 95 % des Nenndurchmessers des Spreizankers (1) ist.

6. Spreizanker nach einem der Ansprüche 1 bis 5, **dadurch gekennzeichnet, dass** der Außendurchmesser (D_{A}) des Abstandsabschnitts (9) kleiner als 97 %, und insbesondere kleiner als 95 % des Außendurchmessers (D_{SH}) der nicht-gespreizten Spreizhülse (3) ist.

7. Spreizanker nach einem der Ansprüche 1 bis 6, **dadurch gekennzeichnet, dass** die axiale Länge (L_{A}) des Abstandsabschnitts (9) größer als die Länge (L_{S}) des Spreizabschnitts (10) ist.

8. Spreizanker nach einem der Ansprüche 1 bis 7, **dadurch gekennzeichnet, dass** am Spreizabschnitt (10) oder zwischen dem Spreizabschnitt (10) und dem Abstandsabschnitt (9) mindestens ein Halteelement (15) zum Halten der Spreizhülse (3) in einem Bohrloch angeordnet ist.

9. Spreizanker nach Anspruch 8, **dadurch gekennzeichnet, dass** das Halteelement (15) nicht einstückig mit der Spreizhülse (3) ist.

10. Spreizanker nach Anspruch 8 oder 9, **dadurch gekennzeichnet, dass** das Halteelement (15) einen Außendurchmesser (D_{HE}) aufweist, der mindestens 0,8 Millimeter größer als der Nenndurchmesser des Spreizankers (1) ist.

11. Befestigungsanordnung mit einem Verankerungsgrund, einem Bohrloch in dem Verankerungsgrund und einem in das Bohrloch eingebrachten Spreizanker (1) nach einem der vorstehenden Ansprüche, wobei das Bohrloch ein Sackloch ist, das im Wesentlichen zylindrisch gebohrt ist, **dadurch gekennzeichnet, dass** das Lastangriffsmittel (5) nicht im Bohrloch angeordnet ist.
